# EUROPÄISCHE PATENTSCHRIFT

(11) **EP 2 682 783 B1**
(45) Veröffentlichungstag und Bekanntmachung des Hinweises auf die Patenterteilung: **29.08.2018**
(21) Anmeldenummer: 13174556.4
(22) Anmeldetag: 01.07.2013
(51) Int. Cl.: G01S 17/89, G01S 7/48, G01S 7/51

(54) **Verfahren und Vorrichtung zum Auswerten von Laserscans**
Method and device for evaluating laser scans
Procédé et dispositif d'exploitation de scans laser

(30) Priorität: 03.07.2012 DE 102012105937; 07.08.2012 DE 102012107226; 07.03.2013 DE 102013102286
(43) Veröffentlichungstag der Anmeldung: 08.01.2014
(73) Patentinhaber: Zoller & Fröhlich GmbH, 88239 Wangen im Allgäu (DE)
(72) Erfinder: Fröhlich, Christoph, 88239 Wangen im Allgäu (DE); Mettenleiter, Markus, 88316 Isny (DE); Härtl, Franz, 88316 Isny (DE)
(74) Vertreter: Winter, Brandl, Fürniss, Hübner, Röss, Kaiser, Polte - Partnerschaft mbB

(56) Entgegenhaltungen:
- EP-A2- 2 322 901
- DE-A1-102009 015 922
- HUIJING ZHAO ET AL: "A ROBUST METHOD FOR REGISTERING GROUND-BASED LASER RANGE IMAGES OF URBAN OUTDOOR OBJECTS", PHOTOGRAMMETRIC ENGINEERING AND REMOTE SENSING, Bd. 67, Nr. 10, 2001, Seiten 1143-1153, XP007913994,

## Beschreibung

Die Erfindung betrifft ein Verfahren zur Auswertung von Laserscanning Projekten und einer Vorrichtung zur Durchführung des Verfahrens.

Die 3D-Vermessung von Objekten mit Hilfe von Laserscannern gewinnt in der Praxis zunehmend an Bedeutung. Bei komplexen oder schwierig zugänglichen Objekten werden, wie in dem Dokument HUIJING ZHAO ET AL: "A ROBUST METHOD FOR REGISTERING GROUND_BASED LASER RANGE IMAGES OF URBAN OUTDOOR OBJECTS", PHOTOGRAMMETRIC ENGINEERING AND REMOTE SENSING, Bd. 67, Nr. 10, 2001, Seiten 1143-1153, XP007913994, fast immer mehrere Laserscans nacheinander von unterschiedlichen Standpunkten aufgenommen und in einem gemeinsamen Projektordner abgespeichert, die dann in ein gemeinsames, übergeordnetes Koordinatensystem überführt werden müssen. Dieser Prozeß wird als "Registrierung" bezeichnet.

Zur Berechnung der Transformationen der einzelnen Standpunkte in das übergeordnete Koordinatensystem ist es erforderlich, einzelne, im übergeordneten System bekannte Punkte im einzelnen Scan zu finden und über deren Lage eine Transformation zu errechnen, die dann auf die gesamte Punktwolke angewendet wird.

Die Lage der gesuchten Punkte im Scan muss des Weiteren sehr genau bekannt sein, da sich sonst die Transformation nicht korrekt berechnen lässt und die Lage der verschiedenen Laserscans, sowohl zueinander als auch zum übergeordneten Koordinaten System, nur mit sehr geringer Genauigkeit gegeben sind. Aus diesem Grund werden bisher in der zu vermessenden Umgebung eine Vielzahl von Targets aufgebracht, auf denen eine laufende Nummer zur Identifikation aufgedruckt ist, die bei der Auswertung manuell erfasst wird. Alle Targets müssen in einer sogenannten "Totalstation" eingemessen und notiert werden - dieser Vorgang ist äußerst aufwendig und bedarf großer Erfahrung. Diese Problematik wird beispielsweise in der DE 10 2008 034 198 A1 der Anmelderin beschrieben.

Demgegenüber liegt der Erfindung die Aufgabe zugrunde, ein Verfahren und eine Vorrichtung zum vereinfachten Auswerten von Laserscans zu schaffen. Diese Aufgabe wird im Hinblick auf das Verfahren durch die Merkmale des Patentanspruchs 1 und im

Hinblick auf die Vorrichtung durch die Merkmale des nebengeordneten Patentanspruchs 10 gelöst.

Vorteilhafte Weiterbildungen der Erfindung sind Gegenstand der Unteransprüche.

Nach dem erfindungsgemäßen Verfahren wird ein Messobjekt aus zumindest zwei unterschiedlichen Standpunkten mittels eines Laserscanners vermessen und die entsprechenden Laserscans dann in einer Projektdatei abgespeichert. Die Scanpositionen und jeweils eine der Vermessung aus dieser Scanposition zugeordnete charakteristische Kontur des Objekts werden dann auf einem Display dargestellt, wobei die Konturen aufgrund der unterschiedlichen Scanpositionen nicht deckungsgleich sein können.

In einem folgenden Verfahrensschritt werden dann die Scanpositionen und/oder charakteristischen Konturen der einzelnen Laserscans so relativ zueinander positioniert, dass die Konturen in etwa in Überdeckung sind.

Diese relativ positionierten Laserscans werden dann als digitales Feldbuch in einer Übersicht abgespeichert.

Auf diese Weise ist es für den Nutzer in sehr einfacher Weise möglich, sich einen Überblick über die erstellten Scanpositionen zu verschaffen.

Bei einem Ausführungsbeispiel der Erfindung ist es vorgesehen, dass zur Vereinfachung der Auswertung verschiedene Scans miteinander verknüpft werden können. Selbstverständlich ist es auch möglich, derartige Verknüpfungen nachträglich zu entfernen. Durch die Verknüpfung erhält die Auswerteeinheit Informationen, dass Überlappungen der einzelnen Scans vorhanden sind, es liegt auf der Hand, dass derartige Verknüpfungen nicht nur bei aufeinanderfolgenden Scans vorhanden sein können, sondern dass einander überlappende Scans auch in beliebiger Reihenfolge zueinander auftreten können. Dementsprechend sind auch Mehrfachverknüpfungen zu unterschiedlichen Scans möglich.

Vorzugsweise wird der jeweils zuletzt erstellte Scan mit Bezug zu dem oder den vorher erstellen Scan(s) relativ positioniert.

Die Auswertung ist besonders einfach, wenn als charakteristische Kontur der Grundriss des Objekts verwendet wird.

Zur weiteren Vereinfachung der Auswertung können bei der Relativpositionierung bekannte Targets berücksichtigt werden, wobei allerdings die Anzahl der Targets deutlich geringer als beim herkömmlichen Verfahren ist.

Die Relativpositionierung kann durch Größenanpassung, Verschieben, Verdrehen der Scanpositionen/Konturen/Targets erfolgen.

Die Auswertung ist besonders exakt, wenn jeder Scanposition eine Höhenkoordinate zugeordnet ist.

Die Auswertung ist weiter vereinfacht, wenn die Übersicht auf einem Display oder dergleichen dreidimensional dargestellt wird.

Die Relativpositionierung kann auch automatisch über einen Rechner oder dergleichen erfolgen.

Um die erforderliche Rechenleistung zu verringern und die Auswertegeschwindigkeit zu erhöhen kann es vorteilhaft sein, zunächst eine manuelle Vorpositionierung der Laserscans am Display vorzunehmen und dann die Feinjustierung automatisch, das heißt über den Rechner der Auswerteeinheit oder dergleichen vorzunehmen. Diese Vorpositionierung ist relativ einfach am Bildschirm über geeignete Steuerelemente durchführbar.

Die Auswertung wird weiter vereinfacht, wenn über eine geeignete Sensoreinheit, beispielsweise einen GPS-Sensor oder einen integrierten MEMS-Sensor, wie er beispielsweise bei modernen Mobilfunkgeräten verwendet wird, die ungefähre Scanposition bestimmt wird, so dass dann in Kenntnis dieser Standpunkte eine automatische, exakte Relativpositionierung der Laserscans anhand von gemeinsamen Merkmalen in den Überlappungsbereichen der Laserscans erfolgen kann, ohne dass es einen manuellen Eingriffs bedarf. Die Verwendung von Targets ist dann auch nicht mehr erforderlich.

Die erfindungsgemäße Vorrichtung ist ein 3D-Laser-Scanner mit einer Auswerteeinheit, wobei der 3D-Laser-Scanner entsprechend den Merkmalen des Patentanspruchs 10 zur Durchführung des Verfahrens eingerichtet ist. Bevorzugte Ausführungsbeispiele der Erfindung werden im Folgenden anhand schematischer Zeichnungen näher erläutert. Es zeigen:
Figur 1 eine Abbildung der Scanpositionen zweier Laserscans auf einem Display einer erfindungsgemäßen Vorrichtung;
Figur 2 die Laserscans gemäß Figur 1 nach einer Relativpositionierung;
Figur 3 eine Displaydarstellung eines elektronischen Feldbuchs mit fünf Laserscans aus unterschiedlichen Scanpositionen vor der Relativpositionierung des letzten Laserscans und
Figur 4 das elektronische Feldbuch gemäß Figur 3 nach der Relativpositionierung und einer Neuordnung der Verknüpfung einzelner Scanpositionen / Laserscans.

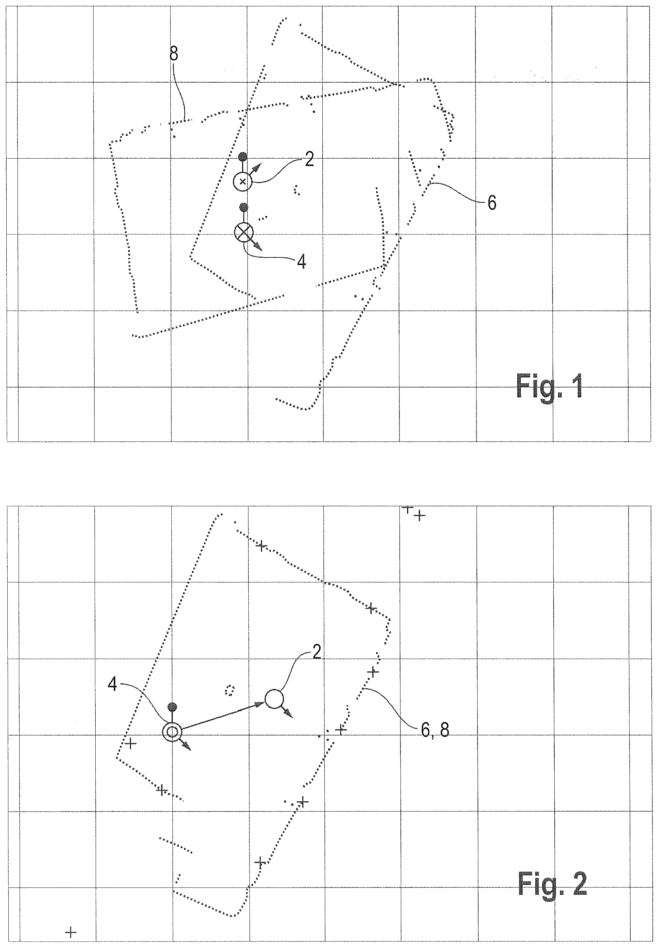

In Figur 1 ist ein Screen Shot eines Displays einer Auswerteeinheit eines Laserscanners dargestellt, bei dem zwei Laserscans mit ihren Scanpositionen 2, 4 und den zugehörigen Konturen 6, 8 des Grundrisses der zu vermessenden Umgebung (im Beispiel eine Fertigungshalle) dargestellt sind. Man erkennt, dass aufgrund der unterschiedlichen Scanpositionen die Grundrisse 6, 8 zueinander versetzt sind.

Im Folgenden werden dann manuell oder automatisch die Grundrisse 6, 8 und die Scanpositionen 2, 4 so lange verschoben und gedreht bis die Grundrisse 6, 8 gemäß der Darstellung in Figur 2 weitestgehend in Überdeckung sind. Die einzelnen Scanpositionen sind farblich gekennzeichnet, wobei die Farbe die Höhe der Scanposition wiedergibt.

Die Scanposition 4 des zuletzt aufgenommenen Laserscans ist dabei farblich von derjenigen des zuvor aufgenommenen Laserscans abgesetzt. Nach dem Scan wird dann die Scanposition 4 des zuletzt aufgenommenen Laserscans mit dem zugehörigen Grundriss 8 über auf dem als Bedienoberfläche ausgebildeten Touchscreen-Display dargestellte Softkeys in Überdeckung gebracht, wobei der Grundriss gedreht, verschoben oder auf sonstige Weise positioniert werden kann.

Bei der automatischen (Target losen) Registrierung der einzelnen Laserscans zueinander ist es besonders wichtig, daß nur solche Scans vom Registrierungs-Algorithmus bearbeitet werden, die auch einen gemeinsamen Überlappungsbereich aufweisen. Ist dieser Bereich nicht ausreichend, wird der Algorithmus nur unnötig Rechenzeit beanspruchen ohne jemals zu einem Ergebnis gelangen zu können. Bei realen Scanprojekten werden jedoch Dutzende wenn nicht Hunderte von Laserscans aufgenommen, so daß es sehr wichtig ist zu vermerken, welcher Scan mit welchem überlappende Bereiche hat - nur diese werden überhaupt dem Registrierungs-Algorithmus zur Registrierung übergeben. Diese Markierung erfolgt zunächst automatisch (zwischen dem aktuellen und dem vorherigen Laserscan), kann jedoch durch den Bediener des Laserscanners vor Ort oder nachträglich (in der Auswert-Software zur Registrierung) abgeändert werden. Die Markierung besteht aus graphischen Symbolen (schwarze Pfeile), die alle Scans mit gemeinsamem Überlappungsbereich verbinden.

Die graphische Darstellung der Scannerstandpunkte und Verknüpfungen ist jedoch nicht nur für die Registrierung erforderlich, sondern verschafft dem Anwender eine graphische Übersicht und Orientierung bei größeren Scanprojekten. Ohne diese Orientierung hätte der Anwender schon vor Ort Schwierigkeiten festzustellen, ob er überhaupt genügend Standpunkte zur Erfassung der Umgebung gewählt hat. Nachträglich wäre es völlig unmöglich festzustellen wo welcher Scan aufgenommen wurde. Bislang machen Anwender deshalb solche Skizzen händisch in ihrem als "Feldbuch" bezeichneten Notizbuch.

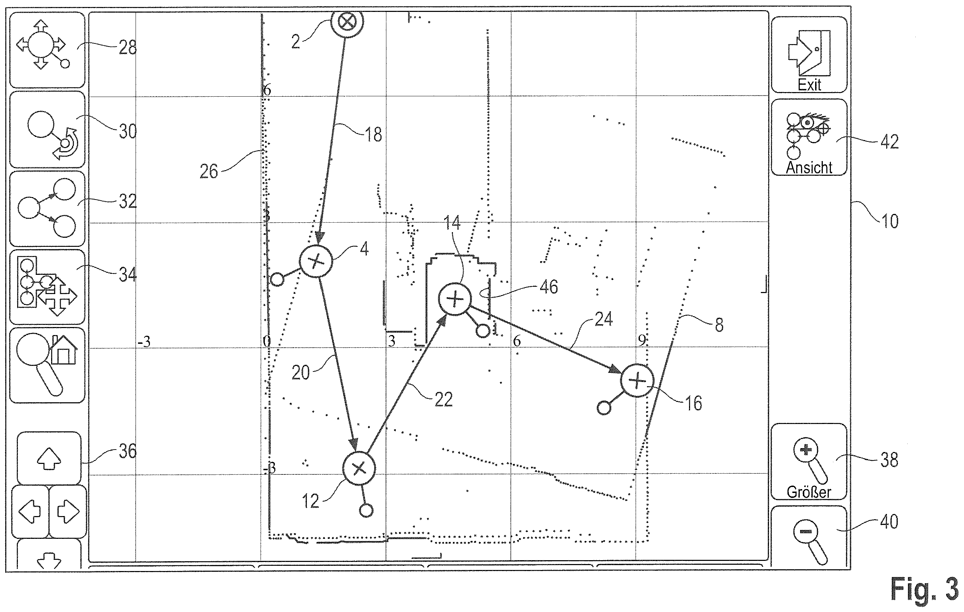

Eine Verknüpfung mehrerer Laserscans ist in Figur 3 dargestellt. Diese zeigt ein Display 10 eines Laserscanners, auf dem die durchgeführten Laserscans dargestellt sind. Bei dem in Figur 3 dargestellten Ausführungsbeispiel sind fünf Laserscans in unterschiedlichen Scanpositionen 2, 4, 12, 14 und 16 dargestellt, wobei die Scanposition 16 des zuletzt aufgenommenen Laserscans wiederum farblich, beispielsweise rot, gekennzeichnet ist. Bereits bei der Aufnahme im Laserscanner wurde automatisch eine der Scanreihenfolge entsprechende Verknüpfung erstellt, die durch die Verknüpfungspfeile 18, 20, 22, 24 gekennzeichnet ist.

Die Grundrisse der aus den Scanpositionen 2, 4, 12 und 14 erstellten Laserscans wurden bereits in der vorbeschriebenen Weise miteinander in Überdeckung gebracht. Diese Grundrisskontur ist in der Darstellung gemäß Figur 3 mit dem Bezugszeichen 26 gekennzeichnet und enthält dementsprechend die Grundrisse zu den Laserscans aus den Scanpositionen 2, 4, 12 und 14. Der Grundriss des letzten Laserscans ist in der Darstellung gemäß Figur 3 mit dem Bezugszeichen 8 versehen. Man erkennt, dass sich dieser Grundriss 8 gegenüber der relativpositionierten Grundrisskontur 26 sowohl in der Lage als auch in der Orientierung unterscheidet. Die Relativpositionierung der vier zuvor aufgenommenen Laserscans erfolgte bereits über die genannten Softkeys, die auf dem als Touchscreen ausgebildeten Display 10 abgebildet sind. Selbstverständlich können auch hardwareseitige Tasten oder dergleichen vorgesehen werden. Beim konkreten Ausführungsbeispiel sind unter anderem Softkeys 28, 30, 32, 34, 36, 42, 38, 40 ausgebildet. Sie dienen zum Verschieben 28, zum Verdrehen 30, und zur Erstellung einer Verknüpfung 32 der Grundrisse 26, 8 bzw. der Laserscans 2, 4, 12, 14, 16. Zur Verschiebung 34, dem Zoom 38,40, sowie der "Home" Position 35 der Gesamtansicht sind drei weitere Softkeys vorhanden. Alle Operationen können entweder durch "Anfassen" des Objektes (Berühren des Touch-Screens) oder Navigation mit den Softkeys 36 erfolgen. Mit 42 kann zwischen verschiedenen Ansichts-Modi gewechselt werden. Selbstverständlich können auch weitere Funktionen programmiert werden.

Eine Besonderheit des vermessenen Objektes besteht beim Ausführungsbeispiel gemäß Figur 3 darin, dass dieses eine Fertigungshalle mit einem Gang 46 ist, der aus einigen Scanpositionen, beispielsweise den Scanpositionen 2, 4 und 16 nicht einsehbar ist. Wie erläutert, werden seitens des Laserscanners zunächst automatische Verknüpfungen in der Reihenfolge der aufgenommenen Laserscans hergestellt, wie in der Figur 3 dargestellt, die jedoch in diesem Fall teilweise fehlerhaft sind, da durch den Gang eine unerwartete Abschattung zwischen aufeinanderfolgenden Laserscans eingetreten ist. Sie müssen deshalb vom Anwender teilweise korrigiert werden.

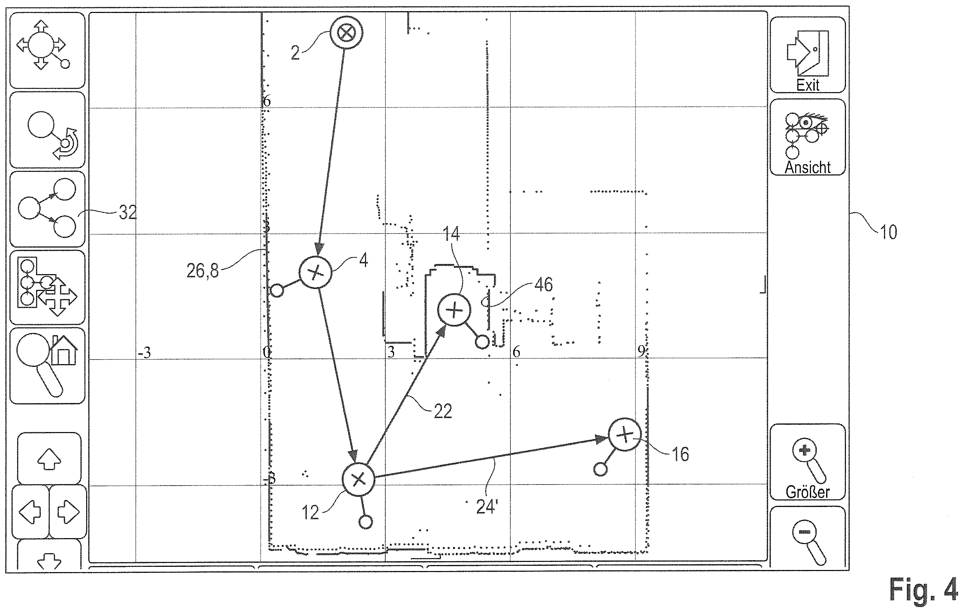

Figur 4 zeigt das Display mit den fünf Laserscans nach der vorbeschriebenen Relativpositionierung der Grundrisse, wobei dann die Grundrisskontur 26 mit dem Grundriss 8 durch Betätigung der genannten Softkeys in Überdeckung gebracht wurde, so dass auf dem Display 10 die tatsächliche ungefähre Lage der Scanpositionen 2, 4, 12, 14, 16 in der vermessenen Fabrikhalle sichtbar ist.

Zunächst wurde über den Softkey 32 die Verknüpfung zwischen den mit den Bezugszeichen 14 und 16 dargestellten Laserscans aufgehoben, da die Scanposition 14 so weit innerhalb des Gangs 46 liegt, dass die Scanposition 16 mit 14 keinen gemeinsamen Überlappungsbereich aufweist. Entsprechendes gilt natürlich auch in umgekehrter Weise. Über den Softkey 32 wird darauf eine Verknüpfung zwischen den Scanpositionen 12 und 16 hergestellt, so dass der Scanposition 12 insgesamt drei Verknüpfungen zugeordnet sind und somit alle drei, wie eingangs beschrieben, automatisch registriert werden können.

Bei den beschriebenen Ausführungsbeispielen erfolgte die grobe Relativpositionierung manuell durch Betätigung der zugeordneten Softkeys. Sie kann jedoch auch automatisch durch im Laserscanner eingebaute Positionierungs-Systeme, wie etwa GPS oder eine kostengünstige MEMS-IMU (inertiales Navigationssystem) erfolgen. In allen Fällen muß diese manuelle Vorpositionierung nicht mit hoher Genauigkeit erfolgen, sondern es reicht in der Regel aus, mit geringer Genauigkeit die Grundrisse nur etwa in Überdeckung zu bringen. Die exakte Positionierung bzw. Orientierung erfolgt ohnehin erst in der Auswertesoftware zur automatischen Registrierung. Nach dieser Registrierung werden die exakten Positionen im Feldbuch der Auswertesoftware (die weitgehend dem Feldbuch am Laserscanner entspricht) angezeigt.

Davon unabhängig ist die bisher übliche Registrierung anhand von speziellen Targets weiterhin möglich, wobei beide Verfahren jeweils allein oder in beliebiger Kombination benutzt werden können. So ist die Verwendung der bisherigen Targets immer dann unerläßlich, wenn Laserscans in tachymetrisch aufgemessene Anlagenkoordinaten überführt werden müssen.

### Bezugszeichenliste

- 2: Scanposition
- 4: Scanposition
- 6: Grundriss
- 8: Grundriss
- 10: Display
- 12: Scanposition
- 14: Scanposition
- 16: Scanposition
- 18: Verknüpfung
- 20: Verknüpfung
- 22: Verknüpfung
- 24: Verknüpfung
- 26: Grundrisskontur
- 28: Softkey
- 30: Softkey
- 32: Softkey
- 34: Softkey
- 36: Softkey
- 38: Softkey
- 40: Softkey
- 42: Softkey

## Patentansprüche

1. Verfahren zum Auswerten von Laserscans mit den Schritten:
- Erstellen von zumindest zwei Scans eines zu vermessenden Objekts aus unterschiedlichen Scanpositionen (2, 4) mittels eines 3D Laser-Scanners;
- Abspeichern der Laserscans in einer Projektdatei einer Auswerteeinheit des 3D-Laser-Scanners;
- Graphische Darstellung der Scanpositionen (2, 4) und einer jeweils zugeordneten Kontur des Objekts (6, 8) vor Ort auf einem Display (10) der Auswerteeinheit des 3D-Laser-Scanners;
- Manuelle oder automatische Relativpositionierung der Scanpositionen (2, 4) und der Konturen (6, 8) vor Ort auf dem Display (10) bis letztere in etwa in Überdeckung sind;
- Speichern der so gewonnenen Übersicht in der Auswerteeinheit des Laser-Scanners als digitales Feldbuch, und
- rechnergestützte Registrierung mittels einer Auswertesoftware.

2. Verfahren nach Patentanspruch 1, wobei mehrere Laserscans vor Ort manuell miteinander verknüpft werden, wobei die Verknüpfung einen gemeinsamen Überlappungsbereich der 3D Laserdaten der verknüpften Scans anzeigt.

3. Verfahren nach Patentanspruch 1 oder 2, wobei der letzte Scan mit Bezug zu dem oder den vorher erstellten Scan(s) relativ positioniert wird.

4. Verfahren nach einem der vorhergehenden Patentansprüche, wobei die Kontur des Objektes ein Grundriss ist.

5. Verfahren nach einem der vorhergehenden Patentansprüche, wobei zur Relativpositionierung auch bereits bekannte Targets genutzt werden können.

6. Verfahren nach Patentanspruch 5, wobei die Relativpositionierung durch Verschieben und/oder Verdrehen der Scanpositionen und/oder Konturen und/oder Targets erfolgt.

7. Verfahren nach einem der vorhergehenden Patentansprüche, wobei jeder Scanposition eine Höhenkoordinate zugeordnet ist.

8. Verfahren nach einem der vorhergehenden Patentansprüche, wobei die Relativpositionierung automatisch, beispielsweise durch ein im Laserscanner eingebautes GPS- oder IMU- System erfolgt.

9. Verfahren nach einem der vorangehenden Ansprüche, wobei der jeweilige Standpunkt des Scanners mittels einer Sensoreinheit erfasst wird.

10. 3D-Laser-Scanner mit einer Auswerteeinheit, wobei der 3D-Laser-Scanner zur Durchführung eines Verfahrens nach einem der vorangehenden Patentansprüche eingerichtet ist und eine Auswerteeinheit umfasst, die dazu ausgelegt ist, dass die in einer Projektdatei der Auswerteeinheit abgelegten Laserscans mit den Scanpositionen (2, 4) und charakteristischen Konturen (6, 8) vor Ort derart manuell oder automatisch bearbeitbar sind, dass in einer Darstellung vor Ort an einem Display (10) der Auswerteeinheit die Konturen (6, 8) in etwa in Überdeckung liegen und die entsprechenden Scanpositionen (2, 4) dargestellt sind.

11. Vorrichtung nach Patentanspruch 10, mit einem Sensor zur Erfassung der Scanposition, vorzugsweise einem GPS-Gerät oder einem MEMS- Sensor.

## Claims

1. Method for evaluating laser scans with the steps:
- Creating at least two scans of an object to be measured from different scan positions (2, 4) by means of a 3D laser scanner;
- Saving the laser scans in a project file of an evaluation unit of the 3D laser scanner;
- Graphic representation of the scan positions (2, 4) and a respective associated contour of the object (6, 8) on site on a display (10) of the evaluation unit of the 3D laser scanner;
- Manual or automatic relative positioning of the scan positions (2, 4) and the contours (6, 8) on site on the display (10) until the latter are approximately superimposed;
- Saving the overview obtained in this way in the evaluation unit of the laser scanner as digital field book, and
- Computer-based registration by means of an evaluation software.

2. Method according to patent claim 1, wherein several laser scans are manually linked together on site, wherein the link shows a common area of overlapping of the 3D laser data of the linked scans.

3. Method according to patent claim 1 or 2, wherein the latest scan is relatively positioned with regard to the previously created scan or scans.

4. Method according to one of the preceding patent claims, wherein the contour of the object is a layout.

5. Method according to one of the preceding patent claims, wherein also already known targets can be used for the relative positioning.

6. Method according to patent claim 5, wherein the relative positioning is achieved by shifting and/or rotating the scan positions and/or contours and/or targets.

7. Method according to one of the preceding patent claims, wherein each scan position is associated with a vertical coordinate.

8. Method according to one of the preceding patent claims, wherein the relative positioning is performed automatically, for example via a GPS or IMU system installed in the laser scanner

9. Method according to one of the preceding claims, wherein the respective standpoint of the scanner is determined by means of a sensor unit

10. 3D laser scanner with an evaluation unit, wherein the 3D laser scanner is configured to perform a method according to one of the preceding patent claims and comprises an evaluation unit configured such that the laser scans stored in a project file of the evaluation unit can be manually or automatically processed with the scan positions (2, 4) and characteristic contours (6, 8) on site in such a way that the contours are approximately superimposed in an illustration on site on a display (10) of the evaluation unit and the respective scan positions (2, 4) are shown.

11. Device according to patent claim 10 with a sensor for determining the scan position, preferably a GPS device or a MEMS sensor.

## Revendications

1. Procédé d'évaluation de balayages au laser avec les étapes :
- élaboration d'au moins deux balayages d'un objet à mesurer à partir de différentes positions de balayage (2, 4) au moyen d'un balayeur laser en 3D ;
- mémorisation des balayages au laser dans un fichier de projet d'une unité d'évaluation du balayeur laser en 3D ;
- représentation graphique des positions de balayage (2, 4) et d'un contour respectivement associé de l'objet (6, 8) localement sur un dispositif d'affichage (10) de l'unité d'évaluation du balayeur laser en 3D ;
- positionnement relatif, manuel ou automatique, des positions de balayage (2, 4) et des contours (6, 8) localement sur le dispositif d'affichage (10) jusqu'à ce que ces derniers se recouvrent à peu près ;
- mémorisation de la vue d'ensemble ainsi obtenue dans l'unité d'évaluation du balayeur laser sous forme de carnet de terrain numérique ; et
- enregistrement, assisté par ordinateur, au moyen d'un logiciel d'évaluation.

2. Procédé selon la revendication 1, dans lequel plusieurs balayages au laser sont combinés entre eux localement manuellement, la combinaison indiquant une zone de chevauchement commune des données de laser en 3D des balayages combinés.

3. Procédé selon la revendication 1 ou 2, dans lequel le dernier balayage est positionné relativement en se rapportant au balayage élaboré auparavant ou aux balayages élaborés auparavant.

4. Procédé selon l'une quelconque des revendications précédentes, dans lequel le contour de l'objet est un plan.

5. Procédé selon l'une quelconque des revendications précédentes, dans lequel des cibles déjà connues peuvent aussi être utilisées en vue du positionnement relatif.

6. Procédé selon la revendication 5, dans lequel le positionnement relatif s'effectue par translation et/ou rotation des positions de balayage et/ou des contours et/ou des cibles.

7. Procédé selon l'une quelconque des revendications précédentes, dans lequel une coordonnée de hauteur est associée à chaque position de balayage.

8. Procédé selon l'une quelconque des revendications précédentes, dans lequel le positionnement relatif s'effectue automatiquement, par exemple par un système GPS ou IMU intégré au balayeur laser.

9. Procédé selon l'une quelconque des revendications précédentes, dans lequel la situation respective du balayeur est détectée au moyen d'un capteur.

10. Balayeur laser en 3D avec une unité d'évaluation, dans lequel le balayeur laser en 3D est conçu pour la mise en oeuvre d'un procédé selon l'une quelconque des revendications précédentes et comprend une unité d'évaluation qui est conçue de telle sorte que les balayages au laser mémorisés dans un fichier de projet de l'unité d'évaluation avec les positions de balayage (2, 4) et les contours caractéristiques (6, 8) peuvent être traités localement, manuellement ou automatiquement, de telle sorte que, dans une représentation localement au niveau d'un dispositif d'affichage (10) de l'unité d'évaluation, les contours (6, 8) se recouvrent à peu près et les positions de balayage correspondantes (2, 4) sont représentées.

11. Dispositif selon la revendication 10, avec un capteur destiné à la détection de la position de balayage, de préférence un appareil GPS ou un capteur MEMS.
